# EUROPÄISCHE PATENTSCHRIFT

(11) **EP 1 359 992 B1**
(45) Veröffentlichungstag und Bekanntmachung des Hinweises auf die Patenterteilung: **09.09.2015**
(21) Anmeldenummer: 02740080.3
(22) Anmeldetag: 14.02.2002
(51) Int. Cl.: B01D 53/02, B01D 53/04, B01D 53/70, B01J 20/20, B01J 20/26, B01J 20/28

(54) **VERWENDUNG EINES MATERIALS SOWIE EIN VERFAHREN ZUR RÜCKHALTUNG VON POLYHALOGENIERTEN VERBINDUNGEN**
USE OF A MATERIAL AND A METHOD FOR RETAINING POLYHALOGENATED COMPOUNDS
UTILISATION D'UN MATERIAU ET PROCEDE POUR RETENIR DES COMPOSES POLYHALOGENES

(30) Priorität: 15.02.2001 DE 10106934; 24.12.2001 DE 10164066
(43) Veröffentlichungstag der Anmeldung: 12.11.2003
(73) Patentinhaber: Karlsruher Institut für Technologie, 76131 Karlsruhe (DE)
(72) Erfinder: KREISZ, Siegfried, 73149 Karlsruhe (DE); HUNSINGER, Hans, 76356 Weingarten (DE)
(86) Internationale Anmeldenummer: PCT/EP2002/001531
(87) Internationale Veröffentlichungsnummer: WO 2002/064235

(56) Entgegenhaltungen:
- EP-A- 0 945 176
- DE-C- 4 425 658
- US-A- 3 862 056
- US-A- 5 595 586

## Beschreibung

Die vorliegende Erfindung betrifft eine Verwendung eines Materials zur Rückhaltung von polyhalogenierten Verbindungen, bestehend aus einem Füllstoff und einer Matrix aus einem Polyolefin, in die der Füllstoff vollständig eingebunden und eingeschlossen ist gemäß des ersten Patentanspruchs sowie ein Verfahren zur Zurückhaltung von polyhalogenierten Verbindungen gemäß des elften Patentanspruchs.

Polyhalogenierte Verbindungen sind beispielsweise polychlorierte Dibenzo-p-dioxine und Dibenzofurane (PCDD/F), welche sich in Verbrennungsprozessen, unter anderem auch in der Müllverbrennung, bilden und mit dem Abgas abgeleitet werden. Aufgrund ihrer Toxizität hat der Gesetzgeber in der Bundesrepublik Deutschland in der 17. Bundesimmissionsschutzverordnung (17.BImSchV) einen Grenzwert für die Emission dieser Verbindungen aus Müllverbrennungsanlagen von 0.1 ng TEQ/Nm³ (TEQ= Toxizitätsäquivalent) festgelegt. Dieser Grenzwert für PCDD/F im Verbrennungsabgas ist nach heutigem Kenntnisstand durch eine alleinige Optimierung der Feuerungsbedingungen nicht einhaltbar. Die Konzentration der PCDD/F im Verbrennungsabgas muss deswegen mit einer der Verbrennung nachgeschalteten zusätzlichen Rauchgasreinigung unter den vorgeschriebenen Grenzwert abgesenkt werden.

Nach heutigem Stand der Technik werden PCDD/F in Verbrennungsanlagen möglichst früh in der Rauchgasreinigung entfernt. Dies geschieht entweder direkt nach der Verbrennung im staubhaltigen Verbrennungsabgas (Rohgas) mittels spezieller Katalysatoren bei hohen Temperaturen, auf dem als Entstaubungsaggregat eingesetzten Gewebefilter mittels Additiv (Flugstromverfahren) oder durch in den Gewebefilter integrierten Katalysator (REMEDIA-Verfahren, Fa. Gore). Alle diese Verfahren führen im Regelbetrieb zu PCDD/ F-Konzentrationen im Verbrennungsabgas, die deutlich unter dem gesetzlich vorgegebenen Emissionsgrenzwert von 0.1 ng TEQ PCDD/F/Nm³ liegen. Es sind keine zusätzlichen Aggregate zur PCDD/F-Abscheidung im weiteren Abgasweg notwendig. Nachgeschaltete zusätzliche Rauchgasreinigungsstufen (z. B. Nasswaschsysteme) werden nur sehr gering mit PCDD/F belastet.

Darüber hinaus bieten sich zu den zuvor beschriebenen Rauchgasreinigungsverfahren Verfahren in Kombination mit im Verbrennungsabgasstrom nachgeschalteten Abgasreinigungssystemen an, welche Komponenten enthalten, welche polyhalogenierten Verbindungen ad- oder absorbieren.

Ein Einsatz von Aktivkohle zur Zurückhaltung von Schadstoffen ist aus der Veröffentlichung Thomas Löser: Einsatz von Aktivkohlen zur PCDD/F-Minderung, Abfallwirtschaftsjournal 4 (1992), Nr. 11, 893 - 902, bekannt. Darin wird besonders die besondere Eignung von Aktivkohle zur Rückhaltung von Quecksilber und chlororganischen Verbindungen in der Rauchgasreinigung hervorgehoben. Dies bedeutet jedoch, dass die Aktivkohle im beladenen Zustand erheblich mit Quecksilber kontaminiert ist und entsprechend aufwendiger entsorgt werden muss. Zudem zeigen eigene Versuche, dass der Einsatz von Aktivkohle in Nasswaschsystemen beispielsweise durch Abrieb zu starken Verunreinigungen im Waschwasser führt und zusätzliche Filter erforderlich macht.

Dabei ist allgemein bekannt, dass die Adsorptionsbindung von PCDD/F insbesondere an Kohlenstoff (C) so beständig ist, dass eine Desorption von bereits adsorbierten PCDD/F bei den in Nasswaschsystemen auftretenden Temperaturen, d. h. maximal 100 °C, nahezu ausschliessbar ist.

In der DE 44 25 658 C1 wird ein Verfahren zur Rückhaltung von polyhalogenierten Verbindungen offenbart, bei dem ein Abgas durch ein Festbett mit Füllkörpern aus einem Polyolefin, beispielsweise Polypropylen (PP) geleitet wird. Insbesondere wird dabei auf die Eignung von PP als Absorptionsmaterial speziell für die PCDD/F-Rückhaltung aus einem Rauchgas hingewiesen, während hingegen Quecksilber durch Polyolefine nicht aufgenommen wird und separat abzuscheiden ist. Dagegen sind die Partikel des Festbetts über eine Desorption der absorbierten polyhalogenierten Verbindungen regenerierbar.

Speziell in Müllverbrennungsanlagen mit Nasswaschsystemen, in denen üblicherweise PP als Werkstoff eingesetzt wird (z.B. als Füllkörper, Tropfenabscheider), tritt jedoch das Problem auf, dass der PCDD/F-Gehalt im Verbrennungsabgas je nach Betriebszustand variiert und im ungünstigsten Fall ein Teil des in geringen Konzentrationen in das Nasswaschsystem eingebrachten PCDD/F im PP absorbiert und angereichert wird. Vorzugsweise im Nicht-Regelbetrieb (An- und Abfahrzeiten, Störfälle) ist mit deutlich erhöhten PCDD/F-Konzentrationen im Verbrennungsabgas zu rechnen. Dies führt zu einer starken PCDD/F-Kontamination der PP-Komponenten und bedeutet, dass nach einer längeren Betriebszeit der Nasswaschsysteme die PCDD/F so stark im PP angereichert sind, dass bereits schon geringe Änderungen des Betriebszustandes, beispielsweise bereits Temperaturschwankungen zu einer PCDD/F-Desorption führen. Das PCDD/F aus dem Verbrennungsabgas wird nämlich im PP nicht irreversibel fixiert sondern es handelt sich um ein stark von der Temperatur und der PCDD/F-Konzentration abhängiges Absorptions-/Desorptionsgleichgewicht.

Grundsätzlich tritt Desorption von PCDD/F aus PP auch bei einem Abreinigungssystem auf, welches ein Festbett von PP-Formkörpern enthalten, das ohne Kondensation und ohne Zusatz einer Flüssigkeit trocken von einem zu reinigenden Gas durchströmt wird.

Niedrig chlorierte PCDD/F neigen eher zur Desorption aus dem PP und tragen deswegen eher zu einer möglichen Überschreitung des zulässigen TEQ-Wertes bei. Je nach Betriebszustand kann sich der TEQ-Wert im Abgas beim Durchlaufen des Nasswaschsystems sogar erhöhen. Daher muss in solchen Anlagen entweder ein zusätzliches Aggregat zur PCDD/F-Abscheidung am Ende der Rauchgasreinigungsstrecke nachgerüstet werden ("Polizeifilter") oder die Freisetzung der PCDD/F aus dem Nasswaschsystem verhindert werden.

In diesem Zusammenhang sei auf die Gegenüberstellung von zwei Verfahren in WO 98/41310 hingewiesen, bei denen dem Waschwasser eines Nasswaschsystems zum einen feine Kohlenstoffpartikel (C-Partikel), zum anderen Tenside zugesetzt werden. Bei beiden Verfahren binden diese Zusätze das PCDD/F aus dem Verbrennungsabgas und bewirken auf diese Weise eine zuverlässige Absenkung der PCDD/F-Konzentration im Abgas. Diese Verfahren benötigen jedoch zusätzliche Dosier- und Abfangvorrichtungen, greifen also komplizierend in den Prozess ein und können die Eigenschaften des Nasswaschsystems durch Schlamm- oder Schaumbildung nachteilig beeinflussen. Zudem kann bei beiden Verfahren im Falle unzureichender Tropfenabscheidung hinter dem Nasswaschsystem nicht ausgeschlossen werden, dass feine, mit PCDD/F angereicherte Partikel (C-Partikel oder Aerosol-Tröpfchen) im Abgasstrom mitgerissen und emittiert werden.

Auch die US 5.595.586 offenbart ein regeneratives Verfahren, mit einem Adsorptionsmaterial in einer Elastomermatix für die Rückhaltung leichtflüchtiger organischer Verbindungen aus Gasen.

Ausgehend davon hat die Erfindung zur Aufgabe, ein Verwendung eines Material zur Rückhaltung von polyhalogenierten Verbindungen sowie ein Verfahren mit diesem Material, im Beispiel für PCDD/F, auf der Basis von Polyolefinen vorzuschlagen, welches sowohl die genannten Nachteile von Aktivkohle als auch die von Polyolefinen vermeidet.

Die Aufgabe wird durch die Verwendung eines Materials mit einem Füllstoffs gelöst, welcher geeignet ist, polyhalogenierte Verbindungen zu adsorbieren und dabei vollständig innerhalb einer Matrix aus einem Polyolefin, vorzugsweise Polypropylen (PP), eingeschlossen und in dieser vollständig eingebunden ist (Füllstoff-dotiertes Polyolefin). Dabei liegt der Füllstoff vorzugsweise als Partikel, Granulat oder Pulver vor und ist quasihomogen, d. h. gleichmäßig im Volumen der Polyolefin-Matrix verteilt eingebunden, wobei Füllstoff und Matrix das Material, welche als Komponenten vorliegen, bilden. Idealer weise ist jeder der einzelnen Füllstoffpartikel vollständig von der Matrix umschlossen, sodass idealer weise die gesamte Oberfläche der Komponenten aus dem Material aus Polyolefinen besteht.

Erfindungsgemäß (Anspruch 1 und 11) wird unter einer vollständigen Einbindung die technisch unter wirtschaftlichen Bedingungen möglichst vollständige Einbindung, Einschließung und Abdeckung des Füllstoffs durch das Polyolefin verstanden, welche vorzugsweise zwischen 80 und 100 % liegt. Zumindest der überwiegende Teil der Schadstoffe soll durch die Polyolefinmatrix zu dem Füllstoff eindiffundieren. In Hinblick auf die Abdeckung des Füllstoffs durch das Polyolefin ist zu berücksichtigen, dass das Material in großen Mengen produziert und eingesetzt werden muss. Eine absolut vollständige Abdeckung ist mit entsprechenden geeigneten großtechnischen Verfahren nicht möglich, obwohl die vollständige Abdeckung im Labormaßstab gelingt. Bei der Einbindung von Füllstoffpartikeln in Polyolefin durch die erwähnten großtechnischen Verfahren kommt es immer wieder vor, dass Oberflächenbereiche der Aktivkohle nicht mit Polyolefinen überdeckt sind. Ein solches Material erzeugt auf Papier möglicherweise einen Strich, bestehend aus dem Abrieb des Füllstoffs. Dennoch ist ein derartiges Material für den erfindungsgemäßen Zwecke geeignet.

In vorteilhafter Weise werden nicht nur die hervorragenden Eigenschaften von Polyolefinen bezüglich mechanischer und chemischer Stabilität und der Absorption von PCDD/F weiterhin gewährleistet, sondern auch eine unerwünschte Desorption der PCDD/F aus dem Material weitestgehend vermieden. Dies zeigt insbesondere dann, wenn das Ad- bzw. Absorptionsvermögen der Füllstoffe stärker sind als die der Polyolefinmatrix. Eine Regenerierbarkeit des Absorptionsmaterial über eine Desorption der polyhalogenierten Verbindungen wird aus diesem Grund nicht angestrebt. Folglich muss das Material für eine problemarme und damit kostengünstige Entsorgung durch Verbrennung so gestaltet sein, dass alle abgeschiedenen Substanzen in der Verbrennung zerstört werden. Dabei ist eine Abscheidung bestimmter Problemstoffe z.B. von Quecksilber unerwünscht und weitgehend auszuschließen.

Da polyhalogenierte Verbindungen gut in Polyolefinen diffundieren und sich im Volumen gleichmäßig einlagern, d.h. absorbieren, sind auch die Partikel des Füllstoffs, welche nicht im direkten Kontakt zum zu reinigenden Abgas oder der Waschflüssigkeit stehen, für eine Ab- oder Adsorption von polyhalogenierte Verbindungen zugänglich.

Dabei wird die Eigenschaft von Polyolefinen allgemein und PP im Speziellen als Diffusionssperre für Quecksilber in vorteilhafter Weise ausgenutzt, um eine Quecksilberbeladung des in der Matrix eingebundenen Füllstoffs zu vermeiden. Die Adsorptionskapazität des Füllstoffs bleibt somit ausschließlich für die Beladung mit polyhalogenierten Verbindungen erhalten.

Als Füllstoff bieten sich vor allem kohlenstoffhaltige Substanzen an. Wie bereits eingangs erwähnt ist die Adsorptionsbindung von halogenierten Verbindungen, insbesondere von PCDD/F an Kohlenstoff (C) besonders beständig. Als Füllstoffpartikel in einer Polyolefinmatrix eignen sich daher insbesondere Aktivkohle, Ruß oder fein gemahlener Herdofenkoks.

Durch die Einbindung eines Füllstoffs in einer Polyolefinmatrix wird speziell bei Verwendung von Kohlenstoff als Füllstoff in vorteilhafter Weise ein Abrieb von Kohlenstoffanteilen und damit die eingangs erwähnte Verschmutzungsneigung erheblich reduziert.

Aus dem so dotiertem Polyolefin sind eine Vielzahl von Komponenten eines Abreinigungssystems herstellbar. Dabei spielt es praktisch keine Rolle, ob das Abreinigungssystem ein Nasswaschsystem oder ein System ist, in dem das zu reinigende Gas trocken, d. h. ohne Kondensation oder Zusatz einer Flüssigkeit, gereinigt wird. Als klassisches Einsatzgebiet für das Füllstoff-dotierte Polyolefin bieten sich die üblichen Füllkörper einer Schüttung im Festbett an, welche anstelle aus Polyolefin ohne weitere Änderungen aus dem Füllstoff-dotierten Polyolefin herstellbar sind. Alternativ sind auch andere Füllkörper, welche eine große spezifischen Oberfläche, eine geringe maximale Materialstärke sowie eine gute Anströmbarkeit der gesamten Oberfläche aufweisen, d. h. auch Gewebematten, Fasern, Späne, Streifen, Granulate oder durch Spritzguss hergestellte Formteile aus Füllstoff-dotierten Polyolefin herstellbar.

Aber auch andere Komponenten, wie beispielsweise der Tropfenabscheider, Rohrauskleidungen oder andere konstruktiven Elemente eines Nasswaschsystems, welche in einem direkten Kontakt zum Verbrennungsabgas oder zum Waschwasser stehen, bieten ein Einsatzgebiet für das dotierte PP. Dabei bietet es sich in vorteilhafter Weise an, die Komponenten, die bisher bereits aus PP hergestellt sind, ohne grundlegende konstruktive Änderungen des Nasswaschsystems durch solche aus dotiertem PP zu ersetzen. Zu diesen Komponenten zählen auch durchströmbare Umfassungen oder Behälter für die Füllkörper.

Beim Einsatz des Füllstoff-dotierten Polyolefin ist es grundsätzlich unerheblich, ob die Verwendung in einem Nasswaschsystem oder in einem Abreinigungssystem erfolgt, welches ein Festbett von Formkörpern enthält, welches ohne Kondensation und ohne Zusatz einer Flüssigkeit trocken vom Gas durchströmbar ist.

Für die Herstellung von Komponenten aus dem Füllstoff-dotierten Polyolefin bietet sich u. A. ein Spritzgussverfahren an. Für die Mischung des Füllstoffs mit dem Matrixmaterial bietet sich u. A. der Einsatz eines Zweischneckenextruders an. Der vorgeschlagene Mischprozess ist in den Herstellungsprozess mit einem Spritzgussverfahren integrierbar.

Im folgenden Ausführungsbeispiel werden speziell die Absorptionseigenschaften von PP durch Einbringen von Kohlenstoff, vorzugsweise Aktivkohle, Ruß oder fein gemahlener Herdofenkoks, als Füllstoff verbessert. Der Gehalt an Kohlenstoff im PP liegt im Bereich von 0,1 bis 30 Gew.-%. Speziell hier liegt der besondere Vorteil darin, dass sich nicht nur die Zuverlässigkeit der PCDD/F-Rückhaltung, sondern auch die Standzeiten der Schüttschichtfilter erheblich erhöhen.

Das Ausführungsbeispiel beschreibt die Abreinigung von Polyhalogenierten Verbindungen beispielhaft von PCDD/F aus Verbrennungsabgasen.

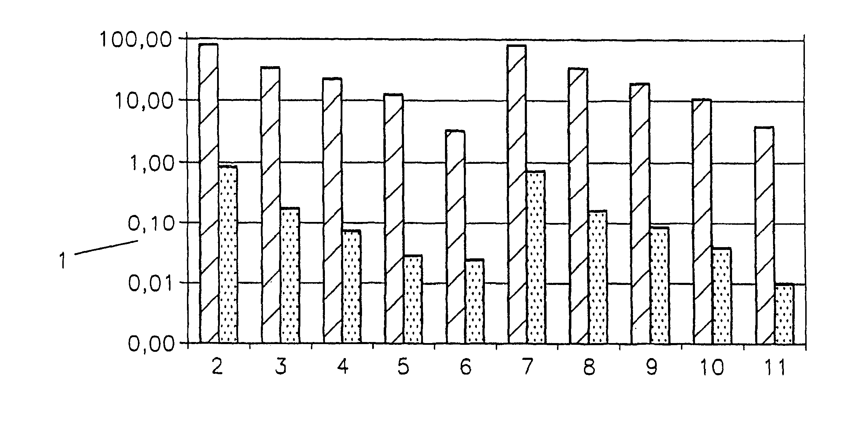

Fig. 1 zeigt für das Ausführungsbeispiel den logarithmisch aufgetragenen Desorptionsgrad 1 in % (Verhältnis der desorbierten Menge an PCDD/F zu der Gesamtbeladung PCDD/F im Füllkörper), für verschiedene PCDD/F mit verschiedenen Chlorierungsstufen in reinem PP (jeweils linker Balken) und in mit ca. 10 Gew.% C dotiertem PP (jeweils rechter Balken). Bei der Ermittlung der Daten wurden ein jeweils mit einer vorgegebenen Menge PCDD/F beladener Füllkörper 24 h lang in einem Luftstrom von 250 Nl/h mit 120 °C angeströmt und das dabei in den Luftstrom desorbierte PCDD/F bestimmt. Der Desorptionsgrad in Abhängigkeit vom Chlorierungsgrad der PCDD/F ist in Fig. 1 exemplarisch für TCDF 2, PeCDF 3, HxCDF 4, HpCDF 5, OCDF 6, TCDD 7, PeCDD 8, HxCDD 9, HpCDD 10 sowie OCDD 11 dargestellt. Man erkennt deutlich, dass der Desorptionsgrad aus dem C-dotierten PP im Vergleich zum undotierten PP ungefähr um den Faktor 100 niedriger liegt.

## Patentansprüche

1. Verwendung eines Materials zur Rückhaltung von polyhalogenierten Verbindungen, bestehend aus einem Füllstoff, der geeignet ist polyhalogenierte Verbindungen zu adsorbieren, und einer Matrix aus einem Polyolefin, in die der Füllstoff vollständig eingebunden und eingeschlossen ist, wobei der Füllstoff aus Kohlenstoffpartikeln besteht.

2. Verwendung eines Materials zur Rückhaltung von polyhalogenierten Verbindungen nach Anspruch 1, **dadurch gekennzeichnet, dass** die Kohlenstoffpartikel durch Aktivkohle, Ruß oder fein gemahlener Herdofenkoks gebildet werden.

3. Verwendung eines Materials zur Rückhaltung von polyhalogenierten Verbindungen nach einem der Ansprüche 1 oder 2, **dadurch gekennzeichnet, dass** das Polyolefin der Matrix ein Polypropylen (PP) ist.

4. Verwendung eines Materials zur Rückhaltung von polyhalogenierten Verbindungen nach einem der vorangegangenen Ansprüche zur Herstellung von Komponenten oder Füllkörper für Abgasreinigungssysteme.

5. Verwendung eines Materials zur Rückhaltung von polyhalogenierten Verbindungen nach Anspruch 4, **dadurch gekennzeichnet, dass** die Komponenten oder die Füllkörper Gewebematten, Fasern, Späne, Streifen, Granulate oder durch Spritzguss hergestellte Formteile sind.

6. Verwendung eines Materials zur Rückhaltung von polyhalogenierten Verbindungen nach einem der Ansprüche 4 bis 5, **dadurch gekennzeichnet, dass** die Komponenten auch durchströmbare Umfassungen oder Behälter für die Füllkörper sowie andere Bauteile des Abgasreinigungssystems beinhalten.

7. Verwendung eines Materials zur Rückhaltung von polyhalogenierten Verbindungen nach einem der Ansprüche 4 bis 6, **dadurch gekennzeichnet, dass** das Abgasreinigungssystem ein Nasswaschsystem ist.

8. Verwendung eines Materials zur Rückhaltung von polyhalogenierten Verbindungen nach einem der Ansprüche 4 bis 6, **dadurch gekennzeichnet, dass** das Abgasreinigungssystem ein Festbett von Formkörpern enthält, welches ohne Kondensation und ohne Zusatz einer Flüssigkeit trocken vom Gas durchströmbar ist.

9. Verwendung eines Materials zur Rückhaltung von polyhalogenierten Verbindungen nach einem der vorangegangenen Ansprüche 4 bis 8, **dadurch gekennzeichnet, dass** die Komponenten über ein Spritzgussverfahren unter Verwendung eines Zweischneckenextruders zur Mischung des Füllstoffs mit dem Matrixmaterial herstellbar ist.

10. Verfahren zur Zurückhaltung von polyhalogenierten Verbindungen, bei dem zur Zurückhaltung ein Material zur Anwendung kommt, welches aus einem Füllstoff, der geeignet ist, polyhalogenierte Verbindungen zu adsorbieren, und einer Matrix aus einem Polyolefin, in der der Füllstoff vollständig eingebunden und eingeschlossen ist, besteht, wobei der Füllstoff aus Kohlenstoffpartikeln besteht.

11. Verfahren nach Anspruch 10, wobei der Füllstoff aus Kohlenstoff (C) mit sehr starken adsorptiven Eigenschaften für polyhalogenierten Verbindungen besteht und der Anteil des C im PP im Bereich zwischen 0,1 und 30 Gew.% liegt.

12. Verfahren nach Anspruch 10 oder 11, wobei der Kohlenstoff aus Aktivkohle, Ruß oder fein gemahlener Herdofenkoks besteht.

13. Verfahren nach einem der Ansprüche 10 bis 12, wobei ein Nasswaschsystems für die Abreinigung von Verbrennungsabgasen zur Anwendung kommt.

## Claims

1. Use of a material for retaining polyhalogenated compounds, consisting of a filler material which is suitable for adsorbing polyhalogenated compounds, and a polyolefin matrix in which said filler material is fully integrated and enclosed, wherein the filler material consists of carbon particles.

2. Use of a material for retaining polyhalogenated compounds according to claim 1, **characterised in that** the carbon particles are formed from activated carbon, soot, or finely-ground hearth furnace coke.

3. Use of a material for retaining polyhalogenated compounds according to claim 1 or 2, **characterised in that** the polyolefin of the matrix is a polypropylene (PP).

4. Use of a material for retaining polyhalogenated compounds according to any one of the preceding claims for producing components or filler bodies for exhaust gas purification systems.

5. Use of a material for retaining polyhalogenated compounds according, to claim 4, **characterised in that** the components or filler bodies are fabric mats, fibres, chips, strips, granules, or moulded parts produced by injection moulding.

6. Use of a material for retaining polyhalogenated compounds according to one of claims 4 to 5, **characterised in that** the components also contain flow-permeable enclosures or containers for the filler bodies and other constituents of the exhaust gas purification system.

7. Use of a material for retaining polyhalogenated compounds according to any one of claims 4 to 6, **characterised in that** the exhaust gas purification system is a wet wash system.

8. Use of a material for retaining polyhalogenated compounds according to any one of claims 4 to 6, **characterised in that** the exhaust gas purification system contains a fixed bed of moulded parts which can be flowed through dry by the gas without condensation and without the addition of a fluid.

9. Use of a material for retaining polyhalogenated compounds according to any one of the preceding claims 4 to 8, **characterised in that** the components can be produced by means of an injection moulding system with the use of a twin screw extruder for the mixing of the filler material with the matrix material.

10. Method for retaining polyhalogenated compounds, with which a material is used for the retention which consists of a filler material which is suitable for adsorbing polyhalogenated compounds and a matrix from a polyolefin, in which the filler material is fully integrated and enclosed, wherein the filler material consists of carbon particles.

11. Method according to claim 10, wherein the filler material consists of carbon (C) with very highly adsorptive properties for polyhalogenated compounds, and the proportion of the (C) in the (PP) lies in the range between 0.1 and 30 % by weight.

12. Method according to claim 10 or 11, wherein the carbon consists of activated carbon, soot, or finely-ground hearth furnace coke.

13. Method according to any one of claims 10 to 12, wherein a wet wash system is used for the purification of combustion exhaust gases.

## Revendications

1. Utilisation d'un matériau pour permettre la rétention de composés polyhalogénés, constitué par une charge apte à adsorber des composés polyhalogénés, et par une matrice en une polyoléfine dans laquelle la charge est totalement intégrée et enfermée, la charge étant constituée par des particules de carbone.

2. Utilisation d'un matériau pour permettre la rétention de composés polyhalogénés conforme à la revendication 1,
**caractérisée en ce que**
les particules de carbone sont formées par du charbon actif, du noir de carbone ou du coke de lignite finement broyé.

3. Utilisation d'un matériau pour permettre la rétention de composés polyhalogénés conforme à l'une des revendications 1 ou 2,
**caractérisée en ce que**
la polyoléfine de la matrice est un polypropylène (PP).

4. Utilisation d'un matériau pour permettre la rétention de composés polyhalogénés conforme à l'une des revendications précédentes pour l'obtention de composants ou de corps de garnissage pour des systèmes de purification des gaz d'échappement.

5. Utilisation d'un matériau pour permettre la rétention de composés polyhalogénés conforme à la revendication 4,
**caractérisée en ce que**
les composants ou les corps de garnissage sont des nappes de tissu, des fibres, des copeaux, des bandes, des granulés ou des éléments moulés fabriqués par moulage par injection.

6. Utilisation d'un matériau pour permettre la rétention de composés polyhalogénés conforme à l'une des revendications 4 à 5,
**caractérisée en ce que**
les composants comprennent également des réceptacles ou des boîtiers au travers desquels peuvent passer les corps de garnissage ou d'autres composants du système de purification des gaz d'échappement.

7. Utilisation d'un matériau pour permettre la rétention de composés polyhalogénés conforme à l'une des revendications 4 à 6,
**caractérisée en ce que**
le système de purification des gaz d'échappement est un système de lavage par voie humide.

8. Utilisation d'un matériau pour permettre la rétention de composés polyhalogénés conforme à l'une des revendications 4 à 6,
**caractérisée en ce que**
le système de purification des gaz d'échappement renferme un lit fixe de corps moulés pouvant être traversé à l'état sec par des gaz sans condensation et sans addition d'un liquide.

9. Utilisation d'un matériau pour permettre la rétention de composés polyhalogénés conforme à l'une des revendications précédentes 4 à 8,
**caractérisée en ce que**
les composants peuvent être obtenus par un procédé de moulage par injection en utilisant une extrudeuse à double vis pour mélanger la charge avec le matériau de la matrice.

10. Procédé pour permettre la rétention de composés polyhalogénés selon lequel pour la rétention, on utilise un matériau qui consiste en une charge qui est apte à adsorber des composés polyhalogénés et une matrice en une polyoléfine dans laquelle la charge est totalement intégrée et enfermée, la charge étant constituée par des particules de carbone.

11. Procédé conforme à la revendication 10, selon lequel la charge est constituée par du carbone (C) ayant de très fortes caractéristiques d'adsorption des composés polyhalogénés et la proportion de C dans le PP est située dans la plage située entre 0,1 et 30% en poids.

12. Procédé conforme à la revendication 10 ou 11, selon lequel le carbone est constitué de charbon actif, de noir de carbone ou du coke de lignite finement broyé.

13. Procédé conforme à l'une des revendications 10 à 12, selon lequel on utilise un système de lavage par voie humide pour la purification de gaz de combustion.
